# EUROPEAN PATENT SPECIFICATION

(11) **EP 1 384 058 B1**
(45) Date of publication and mention of the grant of the patent: **16.11.2011**
(21) Application number: 01970046.7
(22) Date of filing: 13.09.2001
(51) Int. Cl.: G01N 1/36

(54) **METHOD AND DEVICE FOR MELTING EMBEDDING MEDIUM**
VERFAHREN UND VORRICHTUNG ZUM SCHMELZEN VON EINBETTUNGSMEDIUM
Procédé et dispositif pour fondre un milieu d'enrobage

(30) Priority: 13.09.2000 US 232212 P
(43) Date of publication of application: 28.01.2004
(73) Proprietor: Shandon Inc., Pittsburgh, PA 15275 (US)
(72) Inventor: DURKOWSKI, Carolyn, Ann, Valrico, FL 33594 (US); ROSS, Jeffrey, Allan, Pasadena, MD 21122 (US)
(74) Representative: Celestino, Marco
(86) International application number: PCT/IB2001/001671
(87) International publication number: WO 2002/023157

(56) References cited:
- EP-A- 0 245 969
- WO-A-00/14507
- WO-A-95/24628
- DE-U- 9 407 804
- GB-A- 2 359 130
- US-A- 5 244 787

## Description

### Field of the invention

This invention relates generally to the field of preparation of histological samples; more specifically to a device used during preparation to prevent chatter in histological samples.

### Description of the prior art

When tissue samples are taken from humans and/or animals, the tissue samples must be preserved and stabilized before the samples can be sectioned for microscopical examination. There are various methods of preservation and stabilization of these tissue samples. The most common of these methods is mounting the tissue in a tissue cassette and filling the tissue cassette with an embedding media. The tissue cassettes are usually plastic cases with mesh or perforated areas to allow processing reagents to flow through the cassette and prepare the tissue for microscopic examination while preventing the tissue from escaping the cassette. There are many types of tissue cassettes on the market; however, all of the tissue cassettes have a specimen area and a cover to encapsulate the tissue sample in the cassette. Some typical tissue cassettes are described, for example, in U.S. Patent Numbers 5,665,398; 5,843,700; 5,427,742; 5,269,671; 5,127,537; 5,061,452; 4,549,670; 4,421,246; or 6,017,476.

In a typical mounting process, the bottom of the cassette is filled with the embedding medium. The embedding medium should be soluble in processing fluids, suitable for sectioning and ribboning, colorless or transparent, stable, homogeneous, non-toxic, odorless, easy to handle and inexpensive and have a melting point between 30°C and 60°C. Embedding media typically used to embed tissue samples are Paraplast™ and other media that combine paraffin wax with plastic polymers. The tissue is then embedded in the embedding medium, in a specific orientation to allow proper marking and examination. The mold portion is then placed over the cassette and, in some cases, additional embedding medium is poured into the cassette. As is obvious, the process for embedding the tissue in the cassette can be inexact and disorderly. The embedding medium, typically, ends up in the cassette, on the sides or the outside cassette, and on other items. It is inevitable that some embedding medium shall be attached to the outside and sides of the cassette. If the embedding medium is on the sides or the outside of the cassette, it can cause problems in later processing of the tissue specimen.

Once the tissue is embedded in the embedding medium, it is allowed to cool, often with the aid of a cooling device, such as a cold plate. Then the cassette is anchored into a vise in the microtome for slicing or sectioning. A microtome is an instrument for cutting thin sections of tissue specimens for microscopic examination. The thickness of typical sections is approximately 1 to 5 microns. An essential element of a microtome is the blade or knife used to slice the sections of the tissue specimens.

One common problem lab technicians face in using cassettes and microtomes is a phenomenon termed chatters. Chatters are a common section artifact, appearing as alternating thick and thin lines in the section, usually parallel to the knife edge. All chatters are caused by vibration of the knife edge as it cuts the tissue. One cause of chatters is movement of the cassette while it is being sliced. It is extremely important that the cassette not move while being sliced by the knife edge. One reason for the movement of the cassette is that the cassette is not anchored firmly in the vise of the microtome. When a buildup of the embedding medium is still present on the outside of the cassette, the cassette will not firmly anchor in the microtome. Typically, lab technicians will remove the extra embedding medium from the sides or the outside of the cassette by using a common kitchen knife to slice away the embedding medium from the outside and sides of the cassette.. As is obvious, this method of removing the embedding medium has inherent problems including, but not limited to, calluses on the lab technicians' hands, injuries caused from using a knife on small objects, and injuries caused by constant repetitive motions. In addition, the typical method of removing the embedding medium is inexact and sloppy. Further, the typical method of removing the embedding medium does not completely remove the extra embedding medium.

DE9407804U discloses a system to recover from histological paraffin blocks molten paraffin providing a filter and a prefilter.

WO9524628 describes a tissue processing apparatus that uses molten embedding wax on which a stream of hot gas is applied to strip out volatile contaminants.

EP0245969 discloses holding a tissue specimen by a cassette having a mould space in which wax is added to embed the specimen.

W00014507 discloses removal or etching embedding media biological on sample slide in contact with a thermal platform.

US5244787 describes a method of immunologically staining a formalin-fixed tissue preparation, using microwave energy while the tissue preparation is submersed in water. Summary of the invention

Accordingly, it is the principal object of the present invention to provide an apparatus and method for the easy, quick, and efficient removal of extra embedding medium from the outside and sides of a tissue cassette.

It is an additional object of the present invention to provide an apparatus and method for the exact and complete removal of extra embedding medium from the outside and sides of a tissue cassette.

It is a further object of the present invention to provide an apparatus and method for removing extra embedding medium from the outside and sides of a tissue cassette to prevent chatter from occurring while the tissue cassette is being sliced for examination.

These and other features of the present inventions are achieved as defined by independent claims 1 and 8. Other advantageous aspects of the invention are defined by the independent claims.

Moreover, these and other objects of the invention will become more apparent from the following detailed description and the accompanying drawings.

The invention described herein broadly comprises a plate having a face and a back. Heating elements are mounted to the back of the plate. The plate has at least one trench along the length of face of the plate and a plurality of grooves running diagonally across the face of the plate. The plurality of grooves intersects the at least one trench. The plate is arranged such that it is at an angle as compared to a horizontal plane. A printed control circuit board can be operatively arranged to control the heating elements and keep the heating elements, and, thus, the plate at a specified operating temperature. With the use of commercially available self regulating heating elements, the printed circuit board and other control elements of the invention can be eliminated such that the only electrical connections needed are to supply power to the heating elements. The specified operating temperature will be chosen by the user or the manufacturer to be above the melting point of the embedding medium to be removed. A power module is operatively arranged to supply power to the heating elements and the printed circuit board. A power module is defined as a circuit that delivers power from a power source to the heating element and, in some cases, may control the temperature of the heating element.

Once the plate is heated and at the specified temperature, the invention will signal the user that the invention is ready to be used. The user will slide the cassette, having extra embedding medium attached, down the plate such that the extra embedding medium is in contact with the face of the plate. The extra embedding medium is melted from the cassette as the cassette is moved across the face of the plate. The melted embedding medium will run through the plurality of grooves to the trench. The melted embedding medium then runs down the trench to a receptacle which is positioned to capture the melted embedding medium. When the user is finished removing the extra embedding medium from the cassettes, the invention can be turned off and the face of the plate can be wiped with a suitable cloth to remove any remaining melted embedding medium.

The plate can be supported by a stationary stand such that it is a stand-alone unit. As an alternative, the invention can be designed to be portable or held in the user's hand. Once captured, the embedding medium can then be recycled, if so desired.

### Brief description of the drawings

Other aspects, objects, and advantages of the present invention appear more clearly on reading the following best mode for carrying out the invention, given by way of example and made with reference to the accompanying drawings, in which:
- Fig. 1 depicts a three dimensional view of a preferred embodiment of the present invention.
- Fig. 2 is a front view of the face of the plate of a preferred embodiment of the present invention.
- Fig. 3 is a view of the back of the plate showing the connection of the heating elements to connectors to operatively attach the heating elements to a power module.
- Fig. 4 is a side view of a most preferred embodiment of the present invention, depicting the indicator lights and power switch.
- Fig. 5 is an electrical diagram of an alternate preferred embodiment of the element controlling the heating elements of the present invention.
- Fig. 6 is an electrical diagram of the elements controlling the heating elements in an alternate preferred embodiment of the present invention.

### Description of a preferred embodiment

For the purpose of promoting an understanding of the present invention, reference will be made to an embodiment having a stationary stand as illustrated in the drawings. It will nevertheless be understood that no limitations of the scope of the invention is thereby intended, such alterations as making the invention portable or designing a temperature switch to allow the user to select a temperature could provide additional alterations which would fall within the spirit and scope of the invention described herein. Some of the possible embodiments will be mentioned in the following description.

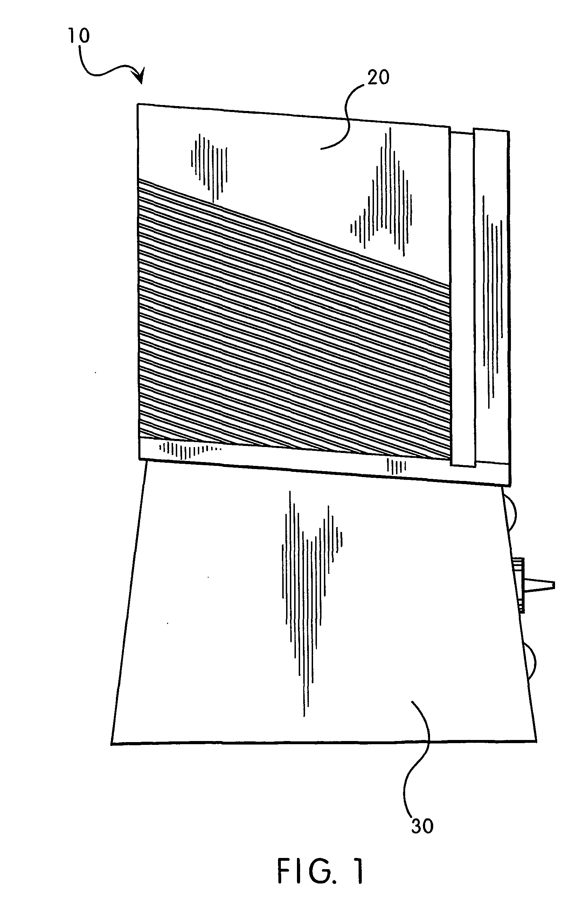

With particular reference to the drawings, the reader should understand that like numerals in different figures refer to the same elements of the invention. As shown in Fig. 1., the device 10 broadly comprises a plate 20 and a stand 30. The plate 20 is attached to the stand 30 at an angle relative to a horizontal surface. In a preferred embodiment, the stand is a box. In the preferred embodiment, one side of the box has a greater height than the other to support the plate at the appropriate angle. In one embodiment, the angle of the plate relative to a horizontal surface is in the range of 5 degrees to 45 degrees.

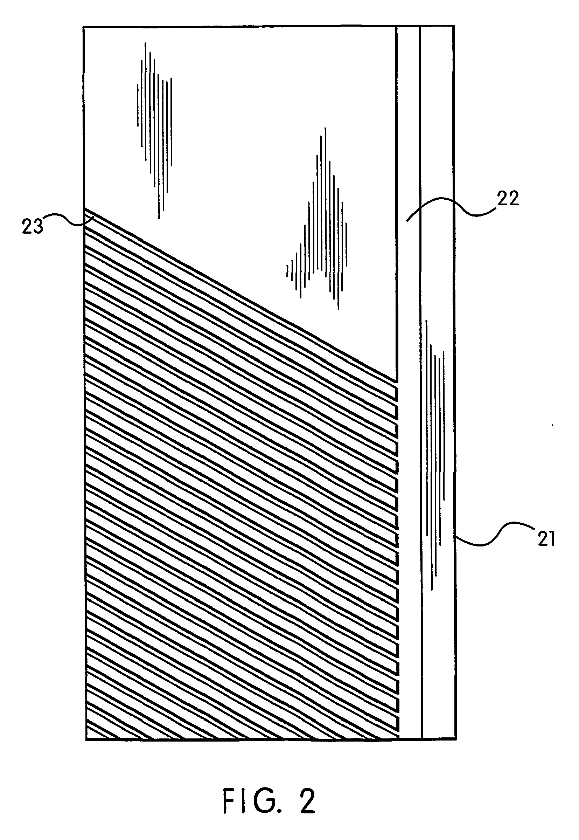

The plate 20 has a face 21 and a back 24. As shown in the preferred embodiment in Fig. 2, the face of the plate has a trench 22 that extends along the length of the face 21 of the plate 20. In a preferred embodiment, the trench 22 is located on one side of the face of the plate. In an alternative embodiment, the trench 22 can be located anywhere on the face of the plate. In a further alternative embodiment, the trench 22 can extend only partially along the face of the plate while still accomplishing the function of providing a path for the molten embedding medium to flow through.

The face of the plate also has a plurality of grooves 23, machined into the face of the plate. The plurality of grooves is angled toward the trench such that any molten embedding medium can be caught in a groove and flow through the groove to the trench. In a preferred embodiment, the plurality of grooves 23 begins at the opposite side of the face of the plate from the trench 22. In a preferred embodiment, the plurality of grooves 23 then extends across the face of the plate to join the trench 22 at the opposite side. In an alternative embodiment, the plurality of grooves can begin at any location on the face of the plate and extend only partially across the face of the plate while still accomplishing the function of providing a path for the molten embedding medium to flow through to the trench. In a further alternative embodiment, the trench 22 can be located in the middle of the face of the plate with the plurality of grooves 23 meeting the trench 22 on either side of the trench. In this alternative embodiment, the plurality of grooves 23 would form a "V" shape with the trench 22 on the face of the plate.

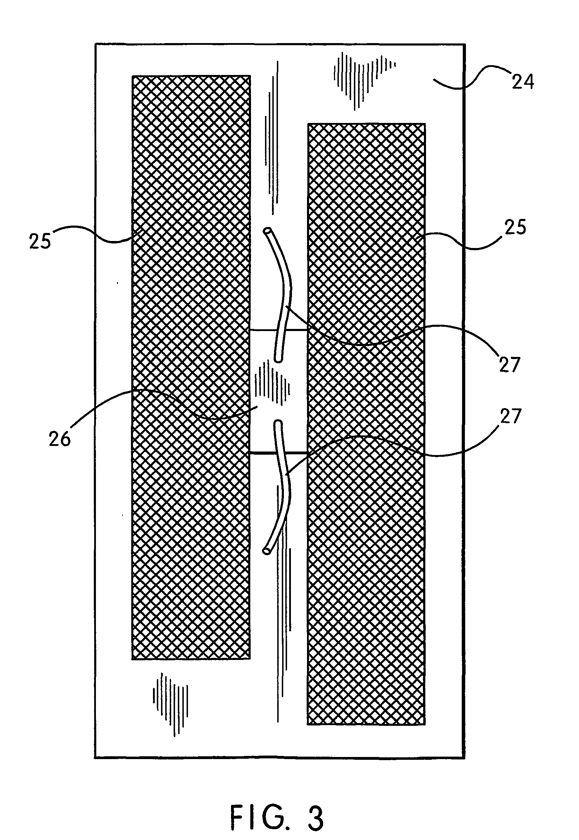

The back of the plate, as shown in Fig. 3, contacts the heating elements 25 of the invention. In a preferred embodiment, the heating elements 25 are mat heating elements that are fixedly attached to the back of the plate. The heating elements, in a most preferred embodiment, are two twenty-five (25) watt, one hundred and ten (110) volt mat heating elements. It should be understood by one skilled in the art that any number of combinations or types of heating elements can be used and that any number of heating elements can be used with this device to accomplish the goal of heating the plate to a specified temperature.

In an alternative embodiment, the heating elements 25 are connected and controlled by a connector 26 that also connects the power module and printed circuit board wires 27 to the heating elements 25. One skilled in the art should understand that any number of connectors can be used to accomplish the control of the heating elements.

In a most preferred embodiment, the plate is heated, by the heating elements, to a temperature in the range of 60 °C to 90 °C. This temperature range is designed to be above the melting point of typical embedding media. However, it should be understood that temperatures outside this range are contemplated by the invention, should the melting point of the embedding medium be outside this range of temperatures. In an alternative embodiment, the printed circuit board 41 of the invention is programmed to control the heat supplied to the plate by the heating elements. The printed circuit board 41 will provide power to the heating elements to keep the plate at or around the specified temperature. Persons of ordinary skill in the art will recognize that the plate 20 is preferably fabricated from metal. A preferred metal is aluminum because of it low cost, heat transfer qualities and machineability

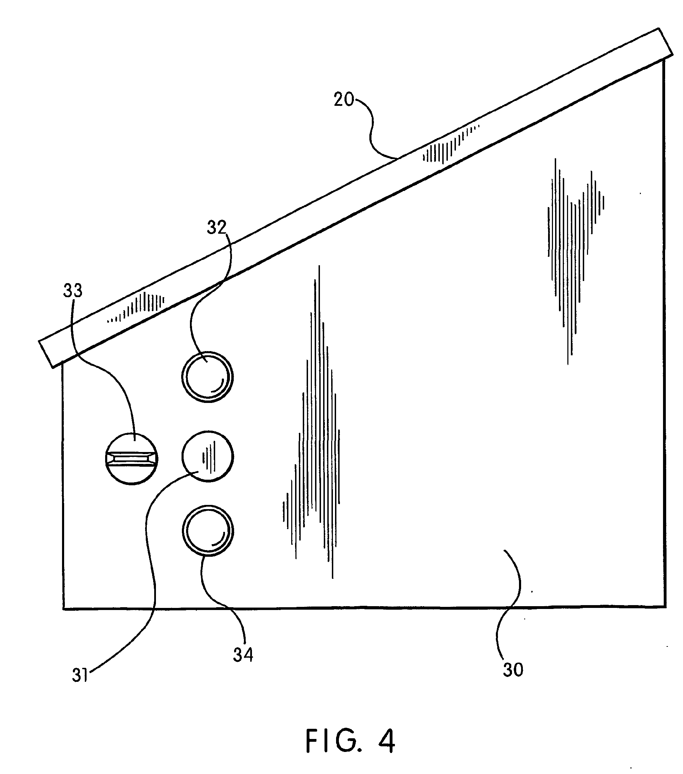

In a preferred embodiment, as shown in Fig. 4, the device will possess an on/off or power switch 33, a ready indicator light 32, a power indicator light 34, and a fuse 31 that can be changed without opening the stand of the invention. In the preferred embodiment, these switches will be located on one side of the stand. The ready indicator light 32 becomes lit to signal to the user that the device is ready to be used. The power indicator light 34 is lit during all times that power is being supplied to device and when the device is turned on.

Once the plate 20 is heated and at the specified temperature, the invention will signal the user that the invention is ready to be used. The user will slide a cassette (not shown), having extra embedding medium attached, down the plate 20 such that the extra embedding medium is in contact with the face 21 of the plate. The extra embedding medium is melted from the cassette as the cassette is moved across the face 21 of the plate 20. The melted embedding medium will run through the plurality of grooves 23 to the trench 22. The melted embedding medium then runs down the trench 22 to a receptacle (not shown) which is positioned to capture the melted embedding medium. When the user is finished removing the extra embedding medium from the cassettes, the invention can be turned off 33 and the face 21 of the plate 20 can be wiped with a suitable cloth to remove any remaining melted embedding medium.

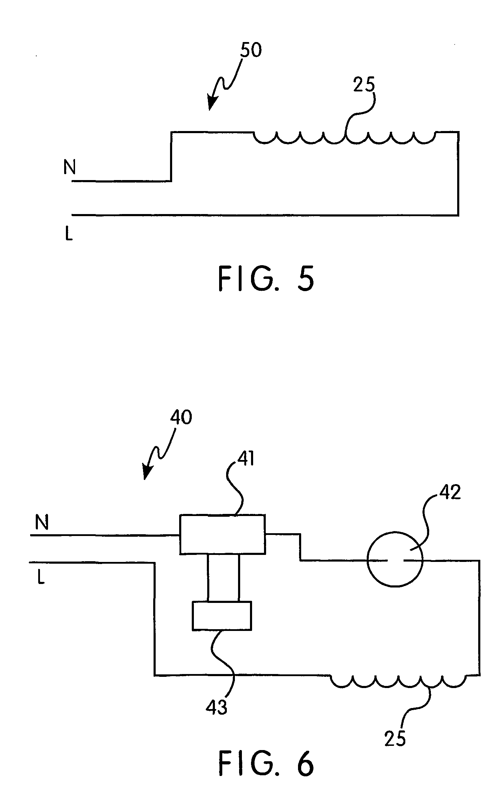

With respect to Fig. 5, an electrical schematic of an alternate preferred embodiment of the power module 50 controlling the heating elements of the invention is shown. With the use of commercially available, self-regulating heating elements, the printed circuit board and other control elements of the invention can be eliminated such that the only electrical connections needed are to supply power to the heating elements. The heating elements will then regulate themselves such that the heating elements do not overheat.

With respect to Fig. 6, an electrical schematic of an alternative preferred embodiment of the power module 40 controlling the heating elements is shown. A printed circuit board 41 and a thermocouple 43 supply power to the heating elements. In an alternative embodiment, an overtemperature protection switch 42 is also provided to prevent the heating elements from overheating. It is understood that the printed circuit board can have many different configurations that control the heating elements and cycle the power to the heating elements to keep the heating elements at the specified temperature. It is also understood that the printed circuit board can be modified to accommodate various changes in the invention, such as the ability of the user to select a specified temperature with a temperature selection switch.

The description presented in the preferred embodiments is not intended to demonstrate all of the possible arrangements and modifications to this design. For those skilled in the art, changes will be apparent that will fall within the scope of the present invention.

## Claims

1. A device for melting embedding medium, comprising:
- a plate (20) having a face (21) and a back side (24) opposite said face (21), said face (21) having a plurality of grooves (23) ;
- a trench (22) adapted to receive said melted embedding medium from said plurality of grooves (23);
- a power module (40,50), adapted to receive power from a power source, for delivering said power from said power source;
- at least one heating element (25) adjacent to said backside (24) of said plate (20), said at least one heating element (25) adapted to receive said power from said power module (40,50); and,
- a stand (30) adapted to carry said plate (20) at an angle to allow gravitational flow of said melted embedding medium along said plurality of grooves (23).

2. The device of claim 1 wherein said grooves (23) extend diagonally across at least a portion of said face (21).

3. The device of claim 1 wherein said power module (40,50) further regulates the temperature of said at least one heating element (25).

4. The device of claim 1 wherein said at least one heating element (25) is self-regulating.

5. The device of claim 1 wherein said plate (20) is made of aluminum.

6. The device of claim 1 wherein said trench (22) has a first longitudinal side and a second longitudinal side, and each of said first and second longitudinal sides is adapted to receive said melted embedding medium from said plurality of grooves (23).

7. The device of claim 1 wherein said trench (22) has an inlet and an outlet, said inlet adapted to receive said melted embedding medium from said plurality of grooves (23).

8. A method for melting excess embedding medium formed on the exterior of the walls of a cassette, using a device having :
- a plate (20) having a face (21) and a back side (24) opposite said face (21), said face (21) having a plurality of grooves (23) said grooves (23) extending diagonally across at least a portion of said face (21);
- a trench (22) adapted to receive said melted embedding medium from said plurality of grooves (23);
- a power module (40,50), adapted to receive power from a power source, for delivering said power from said power source;
- at least one heating element (25) adjacent to said backside (24) of said plate (20), said at least one heating element (25) adapted to receive said power from said power module (40,50); and,
- a stand (30) adapted to carry said plate (20) at an angle to allow gravitational flow of said melted embedding medium along said plurality of grooves (23);
- said method comprising the steps of:
- heating said plate (20) to a temperature sufficient to melt said excess embedding medium;
- contacting said excess embedding medium to said face (21) of said plate (20); and
- sliding said cassette across said plate (20).

9. The method of claim 8 further comprising the step of capturing said melted excess embedding medium with a receptacle.

## Patentansprüche

1. Eine Vorrichtung zum Schmelzen eines Einbettungsmediums, mit:
- einer Platte (20) mit einer Vorderseite (21) und einer Rückseite (24) gegenüber der Vorderseite (21), wobei die Vorderseite (21) eine Vielzahl von Nuten (23) besitzt,
- einem Graben (22), der eingerichtet ist, um das geschmolzene Einbettungsmedium von der Vielzahl von Nuten (23) aufzunehmen,
- einem Leistungsmodul (40,50), das eingerichtet ist, um Energie von einer Energiequelle zu empfangen, um die Energie von der Energiequelle zu liefern,
- mindestens einem Heizelement (25) angrenzend an die Rückseite (24) der Platte (20), wobei das mindestens eine Heizelement (25) eingerichtet ist, um die Energie von dem Energiemodul (40,50) zu empfangen, und
- einem Sockel (30), der eingerichtet ist, um die Platte (20) unter einem Winkel zu halten, damit ein Strömen des geschmolzenen Einbettungsmediums unter Schwerkrafteinfluss entlang der Vielzahl von Nuten (23) möglich ist.

2. Die Vorrichtung gemäß Anspruch 1, wobei die Nuten (23) sich diagonal über mindestens einen Abschnitt der Vorderseite (21) erstrecken.

3. Die Vorrichtung gemäß Anspruch 1, wobei das Energiemodul (40,50) ferner die Temperatur des mindestens einen Heizelements (25) regelt.

4. Die Vorrichtung gemäß Anspruch 1, wobei das mindestens eine Heizelement (25) selbstregelnd ist.

5. Die Vorrichtung gemäß Anspruch 1, wobei die Platte (20) aus Aluminium hergestellt ist.

6. Die Vorrichtung gemäß Anspruch 1, wobei der Graben (22) eine erste longitudinale Seite und eine zweite longitudinale Seite besitzt, und jede der ersten und zweiten longitudinalen Seiten eingerichtet ist, um das geschmolzene Einbettungsmedium von der Vielzahl von Nuten (23) zu empfangen.

7. Die Vorrichtung gemäß Anspruch 1, wobei der Graben (22) einen Einlass und einen Auslass besitzt, wobei der Einlass eingerichtet ist, um das geschmolzene Einbettungsmedium von der Vielzahl von Nuten (23) zu empfangen.

8. Ein Verfahren zum Schmelzen von überschüssigem Einbettungsmedium, das auf der Außenseite der Wände einer Kassette gebildet ist, unter Verwendung einer Vorrichtung, mit:
- einer Platte (20) mit einer Vorderseite (21) und einer Rückseite (24) gegenüber der Vorderseite (21), wobei die Vorderseite (21) eine Vielzahl von Nuten (23) besitzt und die Nuten (23) sich diagonal über mindestens einen Abschnitt der Vorderseite (21) erstrecken,
- einem Graben (22), der eingerichtet ist, um das geschmolzene Einbettungsmedium von der Vielzahl von Nuten (23) aufzunehmen,
- einem Leistungsmodul (40,50), das eingerichtet ist, um Energie von einer Energiequelle zu empfangen, um die Energie von der Energiequelle zu liefern,
- mindestens einem Heizelement (25) angrenzend an die Rückseite (24) der Platte (20), wobei das mindestens eine Heizelement (25) eingerichtet ist, um die Energie von dem Energiemodul (40,50) zu empfangen, und
- einem Sockel (30), der eingerichtet ist, um die Platte (20) unter einem winkel zu halten, damit ein Strömen des geschmolzenen Einbettungsmediums unter Schwerkrafteinfluss entlang der Vielzahl von Nuten (23) möglich ist,
- wobei das Verfahren die folgenden Schritte aufweist:
- Aufheizen der Platte (20) auf eine Temperatur, die ausreicht, um das überschüssige Einbettungsmedium zu schmelzen,
- Inkontaktbringen des überschüssigen Einbettungsmediums mit der Vorderseite (21) der Platte (20), und
- Schieben der Kassette über die Platte (20).

9. Das Verfahren gemäß Anspruch 8, ferner mit dem Schritt des Auffangens des geschmolzenen überschüssigen Einbettungsmediums mit einem Gefäß.

## Revendications

1. Dispositif pour fondre un milieu d'enrobage, comprenant :
- une plaque (20) ayant une face (21) et un côté arrière (24) opposé à ladite face (21), ladite face (21) présentant une pluralité de gorges (23) ;
- un sillon (22) adapté pour recevoir ledit milieu d'enrobage fondu de ladite pluralité de gorges (23) ;
- un module d'alimentation (40, 50) adapté pour recevoir de l'énergie d'une source d'alimentation et pour délivrer ladite énergie à partir de ladite source d'alimentation ;
- au moins un élément de chauffage (25) adjacent audit côté arrière (24) de ladite plaque (20), ledit au moins un élément de chauffage (25) étant adapté pour recevoir ladite énergie dudit module d'alimentation (40, 50) ; et
un support (30) adapté pour porter ladite plaque (20) à un certain angle pour permettre l'écoulement gravitationnel dudit milieu d'enrobage fondu le long de ladite pluralité de gorges (23).

2. Dispositif selon la revendication 1, dans lequel lesdites gorges (23) s'étendent en diagonale à travers au moins une partie de ladite face (21).

3. Dispositif selon la revendication 1, dans lequel ledit module d'alimentation (40, 50) régule en outre la température dudit au moins un élément de chauffage (25).

4. Dispositif selon la revendication 1, dans lequel ledit au moins un élément de chauffage (25) est autoréglable.

5. Dispositif selon la revendication 1, dans lequel ladite plaque (20) est constituée d'aluminium.

6. Dispositif selon la revendication 1, dans lequel ledit sillon (22) a un premier côté longitudinal et un second côté longitudinal, et chacun desdits premier et second côtés longitudinaux est adapté pour recevoir ledit milieu d'enrobage fondu de ladite pluralité de gorges (23).

7. Dispositif selon la revendication 1, dans lequel ledit sillon (22) possède une entrée et une sortie, ladite entrée étant adaptée pour recevoir ledit milieu d'enrobage fondu de ladite pluralité de gorges (23).

8. Procédé de fonte de milieu d'enrobage en excédent formé à l'extérieur des parois d'une cassette, à l'aide d'un dispositif comprenant :
- une plaque (20) ayant une face (21) et un côté arrière (24) opposé à ladite face (21), ladite face (21) présentant une pluralité de gorges (23), lesdites gorges (23) s'étendant en diagonale à travers au moins une partie de ladite face (21) ;
- un sillon (22) adapté pour recevoir ledit milieu d'enrobage fondu de ladite pluralité de gorges (23) ;
- un module d'alimentation (40, 50) adapté pour recevoir de l'énergie d'une source d'alimentation et pour délivrer ladite énergie à partir de ladite source d'alimentation ;
- au moins un élément de chauffage (25) adjacent audit côté arrière (24) de ladite plaque (20), ledit au moins un élément de chauffage (25) étant adapté pour recevoir ladite énergie dudit module d'alimentation (40, 50) ; et
un support (30) adapté pour porter ladite plaque (20) à un certain angle pour permettre l'écoulement gravitationnel dudit milieu d'enrobage fondu le long de ladite pluralité de gorges (23) ;
- ledit procédé comprenant les étapes consistant à :
- chauffer ladite plaque (20) à une température suffisante pour fondre ledit milieu d'enrobage en excédent ;
- mettre en contact ledit milieu d'enrobage en excédent avec ladite face (21) de ladite plaque (20) ; et
- faire glisser ladite cassette à travers ladite plaque (20).

9. Procédé selon la revendication 8, comprenant en outre l'étape consistant à capturer ledit milieu d'enrobage en excédent fondu avec un récipient.
